# EUROPÄISCHE PATENTSCHRIFT

(11) **EP 1 070 818 B1**
(45) Veröffentlichungstag und Bekanntmachung des Hinweises auf die Patenterteilung: **28.10.2015**
(21) Anmeldenummer: 00113112.7
(22) Anmeldetag: 28.06.2000
(51) Int. Cl.: E05D 5/06, E05F 1/12, B62D 25/12

(54) **Schwenklagerung für eine hochschwenkbare Klappe eines Fahrzeugaufbaues**
Hinge for a liftable flap of a vehicle body
Charnière pour volet soulevable d'une carrosserie de véhicule

(30) Priorität: 19.07.1999 DE 19933765
(43) Veröffentlichungstag der Anmeldung: 24.01.2001
(73) Patentinhaber: Volkswagen Aktiengesellschaft, 38440 Wolfsburg (DE)
(72) Erfinder: Bekemeier, Frank, St Just Desvern, Barcelona (ES); Tran, Ky-Tu, Dipl.-Ing., 38108 Braunschweig (DE); Arnheim, Hans-Rudolf, Dipl.-Ing., 38477 Jembke (DE)

(56) Entgegenhaltungen:
- DE-A1- 3 439 662
- DE-C1- 4 341 436
- FR-A- 2 707 929
- US-A- 5 836 050

## Beschreibung

Die Erfindung betrifft eine Schwenklagerung gemäß dem Oberbegriff des Patentanspruchs 1.

Betrachtet man den bevorzugten Einsatzfall der Erfindung, nämlich eine Schwenklagerung für eine um eine dachseitige Schwenkachse schwenkbare Hecktür eines Kraftfahrzeugs, so ist üblicherweise zumindest eine Gasfeder einenends an einem seitlichen Bereich des Aufbaues des Fahrzeugs und anderenends an der Klappe oder Hecktür angelenkt, so dass sie zumindest bei geöffneter Klappe optisch deutlich in Erscheinung tritt und häufig das Be- und Entladen des Fahrzeugs durch die Heckklappe oder Hecktür mit größeren Gegenständen behindert. In diesem Zusammenhang sei lediglich auf die DE 40 00 862 A1 und die DE 195 44 590 C1 verwiesen.

Dieselben Nachteile zeigt der aus der DE 41 24 869 A1 bekannte gattungsbildende Stand der Technik, bei dem eine mit einem motorischen Antrieb zum Öffnen und Schließen der Heckklappe kombinierte Gasfeder, die ebenfalls dem Gewichtsausgleich der Klappe dient, nicht an der Klappe unmittelbar, sondern an einem Scharnierbügel derselben angreift. Die Anordnung der Gasfeder in Querrichtung hängt also ab von der Anordnung des Scharnierbügels in dieser Richtung, so dass die Gasfeder - abgesehen davon, dass sie stets sichtbar ist - in dem durch die Klappe abzudeckenden Raum, in der Regel einem Kofferraum, angeordnet ist. Allerdings ist die Situation bei diesem Stand der Technik gegenüber dem eingangs behandelten Stand der Technik insofern günstiger, als die Gasfeder, wie gesagt, nicht an der Klappe, sondern an einem im Bereich der Dachkante angeordneten Scharnierbügel angreift.

Eine weitere Schwenklagerung beschreibt die DE 34 39 662 A1. Diese Druckschrift zeigt eine kofferraumseitig in einem Gehäuse lösbar angebrachte Schraubendruckfederanordnung zur Gewichtsentlastung von schwenkbaren Bauteilen, die lagerseitig über einen Scharnierhebel angelenkt sind, wobei im Schließzustand des Bauteils an mindestens einem der Scharnierhebel ein Drehmoment angreift, das durch die Schraubendruckfederanordnung aufgebracht wird. Dabei verlaufen die Schraubendruckfedern auf einer Führungsstange, die an ihrem Ende mit einem scharnierhebelseitigen Ausleger angelenkt ist.

Der Erfindung liegt die Aufgabe zugrunde, eine gattungsgemäße Schwenklagerung unter Beibehalt ihrer vorteilhaften Eigenschaften so auszubilden, dass sie weder in den Bereich des von der schwenkbaren Klappe abzudeckenden Raumes hineinragt noch sichtbar ist.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Dadurch, dass das Federelement, das in der Regel eine Gasfeder sein wird, mit seinem einen Ende nicht unmittelbar am Scharnierblatt angreift, sondern mit diesem über einen Schwenkarm in drehmomentübertragender Verbindung steht, der noch dazu nicht flach zu sein braucht, sondern abgekröpft sein kann, besitzt die Erfindung den Vorteil, dass die Anordnung des Scharniers, bestehend aus Scharnierbolzen und Scharnierblatt, in Querrichtung des Fahrzeugs unabhängig von der diesbezüglichen Anordnung des Federelements ist, das demgemäß beispielsweise im Bereich eines Dachseitenholms untergebracht sein kann. Da ferner das Federelement im Zuge eines Längsträgers des Fahrzeugs und der Scharnierbolzen im Zuge eines Querträgers angeordnet ist, tritt es im Bereich der für die Klappe vorgesehenen Öffnung im Fahrzeugaufbau optisch nicht in Erscheinung; es kann ferner durch eine Verkleidung verdeckt sein, so dass die oben bei der Schilderung des Standes der Technik beschriebenen optischen und bedienungsmäßigen Nachteile durch einfache Maßnahmen vermieden sind.

An dieser Stelle sei darauf hingewiesen, dass verständlicherweise die durch die Gasfeder gegebene Unterstützung der Öffnungsbewegung (und gegebenenfalls auch der Endphase der Schließbewegung) der Heckklappe ergänzt sein kann durch einen vorzugsweise elektrischen Antriebsmotor, der dann ebenfalls gleichsam neben oder, wie aus dem gattungsbildenen Stand der Technik bekannt, in Reihe mit der Gasfeder liegend im Zuge des diesbezüglichen aufbauseitigen Längsträgers untergebracht sein kann.

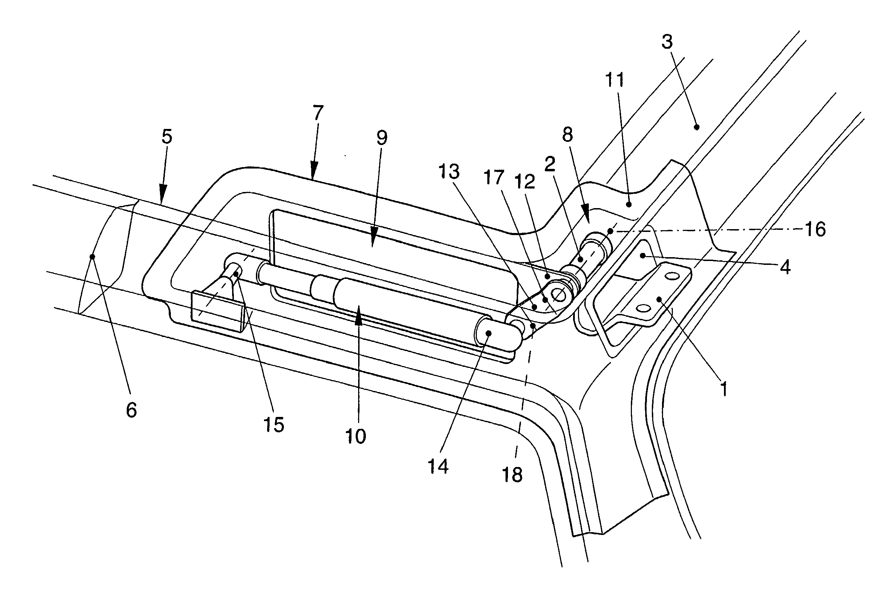

Zur Erläuterung eines Ausführungsbeispiels der Erfindung wird nunmehr auf die Zeichnung Bezug genommen, die perspektivisch schräg von oben hinten den linken Endbereich eines Kraftfahrzeugaufbaus zeigt, der zum Anschlagen einer hochklappbaren Hecktür im Bereich des oberen querverlaufenden Dachholms eingerichtet ist.

Die Hecktür selbst ist nicht dargestellt; sie wird mit zwei Scharnieren, von denen in der Figur nur das linke mit dem Scharnierblatt 1 und dem Scharnierbolzen 2 dargestellt ist, im Zuge eines querverlaufenden Dachträgers 3 schwenkbar befestigt. Zum Durchtritt des Scharnierbügels 1 dient die Öffnung 4, deren Oberkante die Bewegung des Scharnierbügels 1 nicht behindert, da dieser, wie unmittelbar aus der Zeichnung hervorgeht, zur Erzielung eines entsprechenden Freigangs gebogen ist.

Der Dachrahmen wird ergänzt durch seitliche Längsträger, von denen in der Zeichnung nur der mit 5 bezeichnete linke Längsträger erkennbar ist. Er ist, wie üblich, aus mehreren Teilen zu einem geschlossenen Träger zusammengesetzt; zu diesen Teilen gehört das Seitenteil 6.

Im Zuge der Träger 3 und 5 erkennt man einen ein Knotenblech bildenden topf- oder gehäuseartigen Einsatz 7, der die beiden wassergeschützten Kammern 8 (zur Aufnahme der Schamierbestandteile 1 und 2) und 9 (zur Aufnahme der Gasfeder 10) bildet. Der Scharnierbolzen 2 ist in den Kammerwänden 11 und 12 schwenkbar gelagert und drehfest mit dem Scharnierbügel 1 verbunden. Ebenfalls drehfest verbunden mit dem Scharnierbolzen 2, dessen nach vorn weisendes Ende die Wand 12 durchsetzt, ist der Schwenkarm 13, an dessen freiem, schräg nach unten weisenden Ende das eine Ende 14 der Gasfeder 10 angreift, deren anderes Ende bei 15 beispielsweise mittels einer Kugelzapfenlagerung aufbauseitig abgestützt ist. Diese Abstützung ist so eingerichtet, daß die Gasfeder 10 in einem gewissen Bereich Schwenkbewegungen in einer senkrechten Schwenkebene ausführen kann, so daß sie Höhenbewegungen des freien Endes des Schwenkarms 13 bei Schwenkbewegungen desselben um die Achse 16 des Scharnierbolzens 2 folgen kann. Diese Achse 16 stellt also letztlich die Schwenkachse für die Hecktür oder Heckklappe dar.

Wie auch in der Zeichnung angenommen, wird man zwecks Erzielung nur geringer Schwenkbewegungen der Gasfeder 10 in senkrechter Richtung den Schwenkarm 13, ausgehend von der Lage der Schwenkachse 16, im wesentlichen nach unten weisen lassen, so daß Längenänderungen der Gasfeder 10 zu im wesentlichen Bewegungen ihres einen Endes 14 in horizontaler Richtung längs einer horizontalen Tangente an den Bewegungskreis des freien Endes des Schwenkarms 13 führen.

Hier sei nochmals darauf hingewiesen, daß anstelle einer Gasfeder auch ein anderes Federelement, beispielsweise eine hydraulische Kolben-Zylinder-Anordnung Einsatz finden kann und daß in der Kammer 9 außerdem ein motorischer Antrieb für das Öffnen und/oder Schließen der Hecktür untergebracht sein mag.

Wie bereits diese Beschreibung eines Ausführungsbeispiels der Erfindung zeigt, ist trotz Angriffs des Federelements 10 an dem Scharnierbügel 1 weitgehende Freiheit hinsichtlich der relativen Anordnung der Scharnierbestandteile 1, 2 einerseits und der Gasfeder 10 andererseits in Querrichtung gegeben. Eine Anpassung kann durch entsprechende Längendimensionierung des über die Wand 12 nach vom überstehenden Bereichs des Scharnierbolzens 2 oder, wie in der Zeichnung angenommen, durch Abkröpfung des Schwenkarms 13 vorgenommen werden. Diese Abkröpfung ist in der Zeichnung durch die Kanten 17 und 18 angedeutet.

Mit der Erfindung ist also eine gattungsgemäße Schwenklagerung geschaffen, die unsichtbar an Stellen eines Fahrzeugaufbaus unterbringbar ist, an denen sie den Be- und Entladungsvorgang nicht behindert und nicht zu einem Einklemmen von Gegenständen führen kann.

## Patentansprüche

1. Schwenklagerung für eine um eine quer zu einem Fahrzeug verlaufende Schwenkachse schwenkbare Klappe eines Fahrzeugaufbaus, enthaltend einen mit der Schwenkachse zusammenfallenden, aufbauseitig gelagerten Scharnierbolzen für einen klappenseitig festgelegten Scharnierbügel sowie ein mit diesem an einem seiner Enden in drehmomentübertragender Verbindung stehendes Federelement, das mit seinem anderen Ende in einer senkrechten Ebene Schwenkbewegungen des Scharnierbügels folgend schwenkbar aufbauseitig abgestützt ist, wobei das Federelement aufbauseitig verdeckt angeordnet ist, **dadurch gekennzeichnet, dass** die drehmomentübertragende Verbindung einen seitlich des Scharnierbügels (1) im Zuge eines seitlichen aufbauseitigen Längsträgers (5) liegenden Schwenkarm (13) enthält, an dessen freiem Ende das eine Ende (14) des Federelements (10) angreift und der zusammen mit dem im Wesentlichen horizontal in Fahrzeuglängsrichtung angeordneten Federelement (10) und der Abstützung (15) in einer im Zuge des Längsträgers (5) liegenden Kammer (9) angeordnet ist, und der Scharnierbolzen (2) in einer im Zuge eines Querträgers (3) des Fahrzeugaufbaus liegenden weiteren Kammer (8) gelagert ist, die eine Öffnung (4) zum Durchtritt des Scharnierbügels (1) aufweist.

2. Schwenklagerung nach Anspruch 1, **dadurch gekennzeichnet, dass** Längs- und Querträger (5, 3) Bestandteile eines Dachrahmens sind und die Klappe eine Hecktür ist.

3. Schwenklagerung nach einem der Ansprüche 1 bis 2, **dadurch gekennzeichnet, dass** die Kammern (8, 9) zu einem ein Knotenblech bildenden Teil (7) zusammengefasst sind.

4. Schwenklagerung nach einem der Ansprüche 1 bis 3, **dadurch gekennzeichnet, dass** der Schwenkarm (13) mit seinem freien Ende im Wesentlichen senkrecht weist, so dass sich das eine Ende (14) des Federelements (10) bei den Schwenkbewegungen der Klappe annähernd horizontal bewegt.

5. Schwenklagerung nach einem der Ansprüche 1 bis 4, **dadurch gekennzeichnet, dass** der Schwenkarm (13) zur Überbrückung eines Querabstands zwischen dem Scharnierbolzen (2) und dem einen Ende (14) des Federelements (10) abgekröpft (17, 18) ist.

## Claims

1. Hinge for a vehicle body flap which is pivotable about a pivot axis running transversely with respect to a vehicle, the hinge comprising a hinge pin, which coincides with the pivot axis and is mounted on the body, for a hinge bracket, which is secured on the flap, and a spring element which, at one of the ends thereof, is in torque-transmitting connection with said hinge bracket and, at the other end thereof, is supported on the body so as to be pivotable in a vertical plane in a manner following pivoting movements of the hinge bracket, wherein the spring element is arranged concealed on the body, **characterized in that** the torque-transmitting connection contains a pivot arm (13) which is located to the side of the hinge bracket (1) in the path of a lateral longitudinal member (5) on the body, and on the free end of which the one end (14) of the spring element (10) engages and which, together with the spring element (10), which is arranged substantially horizontally in the longitudinal direction of the vehicle, and the support (15) is arranged in a chamber (9) located in the path of the longitudinal member (5), and the hinge pin (2) is mounted in a further chamber (8) which is located in the path of a crossmember (3) of the vehicle body and has an opening (4) for the passage of the hinge bracket (1).

2. Hinge according to Claim 1, **characterized in that** longitudinal member and crossmember (5, 3) are component parts of a roof frame, and the flap is a rear door.

3. Hinge according to either of Claims 1 and 2, **characterized in that** the chambers (8, 9) are combined to form a part (7) forming a junction plate.

4. Hinge according to one of Claims 1 to 3, **characterized in that** the pivot arm (13) points substantially vertically at the free end thereof such that the one end (14) of the spring element (10) moves approximately horizontally during the pivoting movements of the flap.

5. Hinge according to one of Claims 1 to 4, **characterized in that** the pivot arm (13) is bent (17, 18) in order to span a transverse distance between the hinge pin (2) and the one end (14) of the spring element (10).

## Revendications

1. Charnière pour un volet d'une carrosserie de véhicule, pivotant autour d'un axe de pivotement orienté transversalement à un véhicule, contenant un pivot de charnière monté côté carrosserie, coïncidant avec l'axe de pivotement, pour un étrier de charnière fixé côté volet, ainsi qu'un élément de ressort se trouvant en liaison de transmission de couple de rotation avec celui-ci à une de ses extrémités, qui est appuyé côté carrosserie avec son autre extrémité de façon pivotante dans un plan vertical en suivant des mouvements de pivotement de l'étrier de charnière, dans laquelle l'élément de ressort est disposé masqué côté carrosserie, **caractérisée en ce que** la liaison de transmission de couple de rotation comprend un bras pivotant (13) situé latéralement à l'étrier de charnière (1) dans la ligne d'un longeron latéral côté carrosserie (5), à l'extrémité libre duquel une première extrémité (14) de l'élément de ressort (10) est attachée et qui est disposé, en compagnie de l'élément de ressort (10) disposé essentiellement horizontalement dans la direction longitudinale du véhicule et de l'appui (15) dans une chambre (9) située dans le cours du longeron (5), et le pivot de charnière (2) est monté dans une autre chambre (8) située dans le cours d'une traverse (3) de la carrosserie du véhicule, qui présente une ouverture (4) pour le passage de l'étrier de charnière (1).

2. Charnière selon la revendication 1, **caractérisée en ce que** le longeron et la traverse (5, 3) sont des composants d'un cadre de toit et le volet est un hayon.

3. Charnière selon une des revendications 1 à 2, **caractérisée en ce que** les chambres (8, 9) sont rassemblées en une pièce (7) formant un gousset d'assemblage.

4. Charnière selon l'une quelconque des revendications 1 à 3, **caractérisée en ce que** le bras pivotant (13) est orienté essentiellement à la verticale avec son extrémité libre, de telle manière que la première extrémité (14) de l'élément de ressort (10) se déplace approximativement horizontalement lors des mouvements de pivotement du volet.

5. Charnière selon l'une quelconque des revendications 1 à 4, **caractérisée en ce que** le bras pivotant (13) est coudé (17, 18) pour couvrir une distance transversale entre le pivot de charnière (2) et la première extrémité (14) de l'élément de ressort (10).
